# EUROPÄISCHE PATENTSCHRIFT

(11) **EP 1 174 169 B1**
(45) Veröffentlichungstag und Bekanntmachung des Hinweises auf die Patenterteilung: **14.05.2003**
(21) Anmeldenummer: 00115824.5
(22) Anmeldetag: 22.07.2000
(51) Int. Cl.: B01D 17/04, C10L 1/02

(54) **Verfahren zur Behandlung von gebrauchten Pflanzenölen**
Method of treatment of waste vegetable oils
Procédé de traitement d'huiles végétales usées

(43) Veröffentlichungstag der Anmeldung: 23.01.2002
(73) Patentinhaber: Tippkötter, Hubert, 48231 Warendorf (DE)
(72) Erfinder: Tippkötter, Hubert, 48231 Warendorf (DE)
(74) Vertreter: TER MEER STEINMEISTER & PARTNER GbR

(56) Entgegenhaltungen:
- EP-A- 0 336 398
- DE-A- 1 517 925
- DE-A- 3 117 374
- DE-A- 3 244 007
- DE-A- 3 712 391
- DE-A- 4 433 500
- DE-A- 19 721 494
- FR-A- 2 795 086
- US-A- 2 937 977
- US-A- 3 794 583
- US-A- 4 524 000
- US-A- 4 663 222
- US-A- 4 780 211
- US-A- 4 904 392
- US-A- 5 051 182

## Beschreibung

Die Erfindung betrifft ein Verfahren zur Behandlung und Verwertung von gebrauchten Pflanzenölen als Kraftstoff in einem Mehrstoffmotor. Der Begriff "Pflanzenöle" wird in dieser Anmeldung als Oberbegriff für Pflanzenöle und Pflanzenfette gebraucht.

Die umweltfreundliche Entsorgung von gebrauchten Pflanzenölen und -Fetten, beispielsweise von Brat- oder Frittieröl, stellt ein bislang nicht befriedigend gelöstes Problem dar. Aus FR-A-2 795 086, DE-A-31 17 374 und DE-A-44 33 500 ist es bekannt, die Pflanzenöle als Kraftstoff in einem Mehrstoffmotor energetich zu verwerten. In den beiden letztgenannten Druckschriften wird außerdem vorgeschlagen, die Abwärme des Motors zum Vorheizen des Kraftstoffes zu nutzen.

Ein Problem besteht jedoch darin, daß gebrauchte Pflanzenöle in der Regel einen relativ hohen Wasser- und Salzgehalt aufweisen und außerdem zumeist mit Mikroben belastet sind. Bei der Verwertung als Brennstoff oder Kraftstoff erweist sich vor allem der Salzgehalt der Pflanzenöle als hinderlich, weil er bei der Verbrennung zur Bildung von aggregatschädigenden Salzrückständen führt (Heißkorrosion). Außerdem stellen die Pflanzenöle schon bei einem relativ geringen Wassergehalt ein wachstumsgünstiges Milieu für Mikroben dar. Das Mikrobenwachstum führt nicht nur zur Schlammbildung, sondern auch zu einer Absenkung des pH-Wertes und damit zu einer mit zunehmender Lagerzeit ansteigenden Korrosionsgefahr an Behältern, Leitungen und Verbrennungsaggregaten.

Bekannte Verfahren zur Entwässerung von gebrauchten Pflanzenölen sind das Zentrifugieren und die Destillation. Beide Verfahren sind jedoch bisher im Zusammenhang mit einer energetischen Verwertung der Pflanzenöle nicht Wirtschaftlich, weil sie einen relativ hohen apparativen Aufwand und einen relativ hohen Energieeinsatz erfordern, so daß sich letztlich eine negative Ökobilanz ergibt. Außerdem hat sich gezeigt, daß durch Abzentrifugieren des Wasseranteils der Salzgehalt der Pflanzenöle nicht auf ein zulässiges Maß gesenkt werden kann.

Aus DE-A-197 21 494 ist ein Verfahren zur Entwässerung von gebrauchten Pflanzenölen durch Koaleszenzabscheidung bekannt.

Aus EP-A-0 336 398 ist es bekannt, Flüssigkeiten, beispielsweis Flugkraftstoffe, mit Hilfe eines Koalseszenzabscheiders zu entwässern.

Aufgabe der Erfindung ist es, ein Verfahren zu schaffen, das eine wirtschaftliche Entwässerung und Entsalzung und damit eine energetische Verwertung von Pflanzenölen in einem Mehrstoffmotor ohne Schädigung des Motors ermöglicht.

Diese Aufgabe wird erfindungsgemäß dadurch gelöst, daß das Pflanzenöl, bevor es dem Mehrstoffmotor zugeführt wird, in einem Koaleszenzabscheider auf einen Restwassergehalt von unter 0.005% entwässert wird.

Koaleszenzabscheider zur Phasentrennung von Emulsionen sind als solche bekannt und im Handel erhältlich (Internet-Veröffentlichung www.mikrodyn.de/gkoalpub.htm; DE-U-88 15 909 und DE-A-198 37 670). Das Funktionsprinzip beruht darauf, daß feinste Tröpfchen der Nebenphase (z. B. Wasser), die in der Hauptphase (z. B. Öl) dispergiert sind, durch eine Oberfläche, beispielsweise ein Faservlies, dazu gebracht werden, sich miteinander oder mit einem größeren Volumen der Nebenphase zu vereinigen, d. h. koaleszieren. Wenn die Bläschen oder Flüssigkeitsvolumen auf diese Weise eine gewisse Größe erreicht haben, erfolgt die weitere Phasentrennung durch Schwerkraft aufgrund des unterschiedlichen spezifischen Gewichts der beiden Phasen. Bisher wird dieses Koaleszenzverfahren beispielsweise zur Entölung von Abwasser sowie auch zur Entsalzung von Roherdöl eingesetzt. Die Erfindung beruht nun auf der Erkenntnis, daß es mit Hilfe eines Koaleszenzabscheiders möglich ist, gebrauchte Pflanzenöle so aufzubereiten, daß sie für die energetische Verwertung als Kraftstoff in einem Mehrstoffmotor, verwendbar werden. Überraschend ist dabei vor allem, daß es mit Hilfe des Koaleszenzabscheiders auch gelingt, die Pflanzenöle nahezu vollständig zu entsalzen, da das Salz offenbar nicht in der Ölphase, sondern in den sehr feinen Tropfen der wässrigen Phase gelöst ist, die bisher mit Zentrifugierverfahren nicht abgeschieden werden konnten. Da der Wassergehalt mit Hilfe des Koaleszenzabscheiders auf deutlich unter 0,005% und sogar unter 100 ppm, beispielsweise auf 20 ppm gesenkt werden kann, wird auch das Mikrobenwachstum wirksam unterbunden.

Das in dieser Weise aufbereitete Pflanzenöl ist lagerfähig und kann deshalb bis zur endgültigen energetischen Verwertung zwischengelagert werden. In einer vorteilhaften Ausführungsform der Erfindung wird das aus dem Koaleszenzabscheider austretende aufbereitete Pflanzenöl jedoch unmittelbar im Kraftstofftank eines Mehrstoffmotors gesammelt und mit Hilfe eines durch den Mehrstoffmotor angetriebenen Generators in elektrische Energie umgewandelt. Auf diese Weise wird eine dezentrale Entsorgung der gebrauchten Pflanzenöle in relativ kleinen Anlagen erreicht, ohne daß hohe Transportkosten entstehen, und zugleich wird ein Beitrag zur umweltneutralen Energieversorgung geleistet. Ein weiterer Vorteil besteht bei dieser Ausführungsform darin, daß die Abwärme des Mehrstoffmotors zum Vorerwärmen des Öls auf eine optimale Betriebstemperatur des Koaleszenzabscheiders genutzt werden kann.

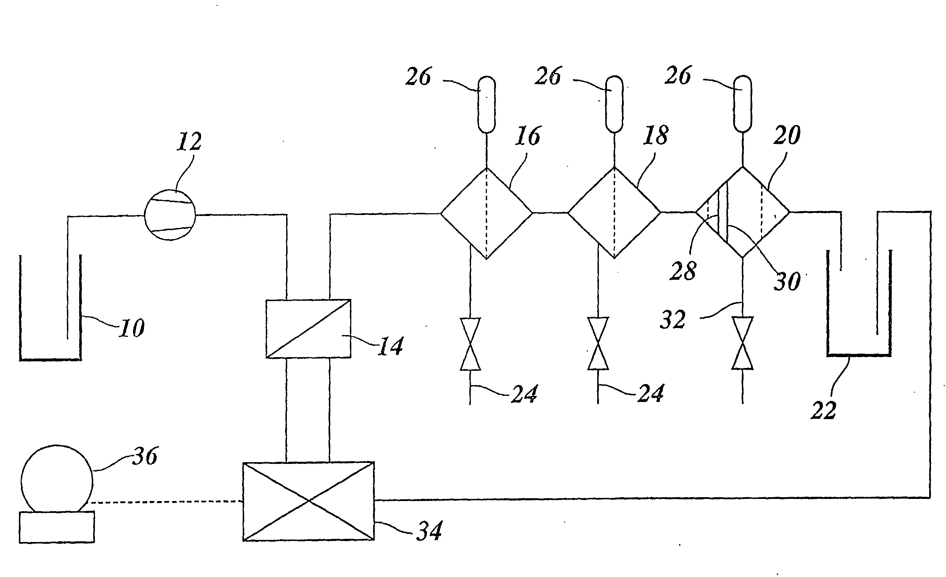

Im folgenden wird ein Ausführungsbeispiel der Erfindung anhand der Zeichnung näher erläutert.

Die einzige Zeichnungsfigur zeigt ein Blockdiagramm einer Anlage zur Aufbereitung und energetischen Verwertung von Pflanzenöl.

Gebrauchtes Pflanzenöl, das einen relativ hohen Wassergehalt von beispielsweise 15 Vol. % haben kann, wird in einem Tank 10 gesammelt und mit Hilfe einer Pumpe 12, beispielsweise einer Zahnradpumpe mit Überströmventil, durch einen Wärmetauscher 14, einen Grobfilter 16, einen Feinfilter 18 und einen Koaleszenzabscheider 20 zu einem Frischöltank 22 gefördert. Im Wärmetauscher 14 wird das Öl auf eine Temperatur von beispielsweise 50 bis 60 °C erwärmt. Diese Temperatur erhöht die Fließfähigkeit des Öls bei der Filterung und stellt eine günstige Betriebstemperatur für den Koaleszenzabscheider 20 dar. Die Filter 16, 18 weisen jeweils einen Schlamm-Ablaß 24 und eine automatische Entlüftungsvorrichtung 26 auf. Im Grobfilter 16 werden vor allem Partikel zurückgehalten. Der Feinfilter 16 enthält einen Partikel-Feinstfilter mit einer Porengröße von beispielsweise 5 µm.

Der Koaleszenzabscheider 20 ist im gezeigten Beispiel zweistufig aufgebaut, mit einem Faserbett 28 aus Mikrofasern mit einem Faserdurchmesser von 1 bis 100 µm und einer zweiten Membran 30 aus Edelstahl mit PTFE-Beschichtung. An diesen Membranen wird die wässrige Phase durch Koaleszenz abgeschieden, so daß der Restwassergehalt auf etwa 0,002% abnimmt. Die wässrige Phase wird zusammen mit den darin gelösten Salzen über einen automatischen Ablaß 32 abgeführt, während die Ölphase in den Frischöltank 22 eingeleitet wird. Auch der Koaleszenzabscheider 20 weist eine automatische Entlüftungsvorrichtung 26 auf.

Der Frischöltank bildet im gezeigten Beispiel zugleich den Kraftstofftank eines Mehrstoffmotors 34, dessen Abwärme im Wärmetauscher 14 genutzt wird. Der Mehrstoffmotor 34 treibt einen Generator 36, durch den elektrische Energie in das Netz eingespeist wird.

## Patentansprüche

1. Verfahren zur Behandlung und Verwertung von gebrauchten Pflanzenölen als Kraftstoff in einem Mehrstoffmotor (34), **dadurch gekennzeichnet, daß** das Pflanzenöl, bevor es dem Mehrstoffmotor (34) zugeführt wird, in einem Koaleszenzabscheider (20) auf einen Restwassergehalt von unter 0,005% entwässert wird.

2. Verfahren nach Anspruch 1, **dadurch gekennzeichnet, daß** der Koaleszenzabscheider (20) ein mehrstufiger Koaleszenzabscheider ist.

3. Verfahren nach Anspruch 1 oder 2, **dadurch gekennzeichnet, daß** der Koaleszenzabscheider (20) ein Faserbett (28) aus Mikrofasern mit einem Faserdurchmesser von 100 µm oder weniger aufweist.

4. Verfahren nach einem der Ansprüche 1 bis 3, **dadurch gekennzeichnet, daß** der Koaleszenzabscheider (20) eine Membran (30) aus Edelstahl mit wasserabweisender Beschichtung aufweist.

5. Verfahren nach einem der vorstehenden Ansprüche, **dadurch gekennzeichnet. daß** das Pflanzenöl vor der Koaleszenzabscheidung in einem Partikel-Felnstfilter (18) vorgereinigt wird.

6. Verfahren nach einem der vorstehenden Ansprüche, **dadurch gekennzeichnet, daß** das Pflanzenöl vor der Koaleszenzabscheidung beziehungsweise vor der Filterung auf eine Temperatur von 40 bis 70 °C erwärmt wird.

7. Verfahren nach einem der vorstehenden Ansprüche, **dadurch gekennzeichnet, daß** das im Koaleszenzabscheider (20) aufbereitete Pflanzenöl unmittelbar in einen Kraftstofftank (22) eines Mehrstoffmotors (34) eingeleitet wird.

8. Verfahren nach den Ansprüchen 6 und 7, **dadurch gekennzeichnet, daß** die Abwärme des Mehrstoffmotors (34) in einem Wärmetauscher (14) zum Erwärmen des Pflanzenöls genutzt wird.

## Claims

1. Method of treating and using waste vegetable oils as fuel in a multi-fuel engine (34), **characterised in that**, before the vegetable oil is fed into the multi-fuel engine (34), water is removed from the vegetable oil in a coalescence separator (20) to a residual water content of less than 0.005%.

2. Method according to claim 1, **characterised in that** the coalescence separator (20) is a multi-stage coalescence separator.

3. Method according to claim 1 or 2, **characterised in that** the coalescence separator (20) has a fibre bed (28) of microfibres having a fibre diameter of 100 µm or less.

4. Method according to any one of claims 1 to 3, **characterised in that** the coalescence separator (20) has a membrane (30) of stainless steel having a hydrophobic coating.

5. Method according to any one of the preceding claims, **characterised in that** the vegetable oil, before undergoing coalescence separation, is subjected to preliminary purification in a superfine particle filter (18).

6. Method according to any one of the preceding claims, **characterised in that** the vegetable oil, before undergoing coalescence separation or before undergoing filtration, is heated to a temperature from 40 to 70°C.

7. Method according to any one of the preceding claims,
**characterised in that** the vegetable oil processed in the coalescence separator (20) is immediately introduced into a fuel tank (22) of a multi-fuel engine (34).

8. Method according to claims 6 and 7, **characterised in that** the waste heat from the multi-fuel engine (34) is used in a heat exchanger (14) to heat the vegetable oil.

## Revendications

1. Procédé pour le traitement et la valorisation d'huiles végétales usagées comme carburant dans un moteur multicarburant (34), **caractérisé en ce que** l'huile végétale, avant d'être introduite dans le moteur multicarburant (34), est asséchée dans un séparateur à coalescence (20) à une teneur résiduelle en eau inférieure à 0,005 %.

2. Procédé selon la revendication 1, **caractérisé en ce que** le séparateur à coalescence (20) est un séparateur à coalescence à plusieurs étages.

3. Procédé selon la revendication 1 ou 2, **caractérisé en ce que** le séparateur à coalescence (20) présente un lit de fibres (28) constitué de microfibres avec un diamètre de fibre de 100 µm ou moins.

4. Procédé selon une des revendications 1 à 3, **caractérisé en ce que** le séparateur à coalescence (20) présente une membrane (30) d'acier inoxydable avec un revêtement hydrophobe.

5. Procédé selon une des revendications précédentes, **caractérisé en ce que** l'huile végétale est purifiée au préalable avant la séparation par coalescence dans un filtre à particules extra-fin (18).

6. Procédé selon une des revendications précédentes, **caractérisé en ce que** l'huile végétale est chauffée avant la séparation par coalescence ou avant la filtration à une température de 40 à 70°C.

7. Procédé selon une des revendications précédentes, **caractérisé en ce que** l'huile végétale préparée dans le séparateur à coalescence (20) est introduite immédiatement dans un réservoir de carburant (22) d'un moteur multicarburant (34).

8. Procédé selon les revendications 6 et 7, **caractérisé en ce que** la chaleur perdue du moteur multicarburant (34) est utilisée dans un échangeur de chaleur (14) pour réchauffer l'huile végétale.
